# EUROPÄISCHE PATENTANMELDUNG

(11) **EP 2 341 155 A1**
(43) Veröffentlichungstag der Anmeldung: **06.07.2011**
(21) Anmeldenummer: 10196441.9
(22) Anmeldetag: 22.12.2010
(51) Int. Cl.: C21C 5/46, F27B 3/22, F23D 14/48, F23D 14/54

(54) **Lanzenkopf für eine Blaslanze mit einem keramischen Düseneinsatz**

(30) Priorität: 29.12.2009 DE 102009060827
(71) Anmelder: SMS Siemag AG, 40237 Düsseldorf (DE)
(72) Erfinder: Odenthal, Hans-Jürgen, 40822, Mettmann (DE); Schlüter, Jochen, 44265, Dortmund (DE); Schultz, Hans Jürgen, 47055, Duisburg (DE); Schrölkamp, Christoph, 47447, Moers (DE); Tudyka, Stefan, 86356, Neusäß (DE); Kienzle, Andreas, 86753, Balgheim (DE)
(74) Vertreter: Klüppel, Walter

(57) **Zusammenfassung**

Die vorliegende Erfindung betrifft einen Lanzenkopf 3 für eine Blaslanze 2 mit einem im Inneren des Lanzenkopfes 3 befindlichen Innenrohrs 9 für die Sauerstoffzuführung und mit mehreren von dem Innenrohr 9 abzweigenden, die Bodenwand des Lanzenkopfes 3 durchsetzenden Düsen 4, für einen Sauerstoffstrahl 5, wobei die Innenwände der Düsen 4 vollständig mit einem neuen feuerfesten Keramikmaterial, enthaltend C/SiC, beschichtet sind. Der Lanzenkopf 3 der Blaslanze 2 wird mit Wasser gekühlt. Dazu wird durch ein Mittelrohr 8 über die Blaslanze 2 Kühlwasser in den Lanzenkopf 3 zugeführt. Das Kühlwasser wird durch ein Außenrohr 7 zurückgeführt. Der Aufbau aus Mittelrohr 8, Wandung Innenrohr 12, Wandung Mittelrohr 11, Außenrohr 7 und Wandung Außenrohr 10 bildet einen Kühlmantel für den Lanzenkopf 3 und die Düsen 4.

## Beschreibung

Die vorliegende Erfindung betrifft einen Lanzenkopf für eine Blaslanze mit einem neuen keramischen C/SiC Düseneinsatz für einen Basic Oxygen Furnace (BOF) Konverter.

Bei der Stahlerzeugung in einem BOF wird der Sauerstoff mit Hilfe einer Blaslanze auf das Metallbad aufgeblasen. Im Kopf der Blaslanze befinden sich mehrere konvergent-divergente so genannte Lavaldüsen. Die Düsen beschleunigen den Sauerstoff auf Überschallgeschwindigkeit. Der Sauerstoff trifft auf die Schmelze und erzeugt dort eine oszillierende Blasmulde. Der Sauerstoff sorgt für eine intensive Entkohlungsreaktion in der Schmelze.

Aus EP 0 304 688 A1 ist eine Tauchlanze bekannt, die aus einem Stahlrohr besteht, das von einem feuerfesten keramischen Mantelrohr umgeben ist, wobei an der Kontaktfläche zwischen Stahlrohr und Mantelrohr eine Lage aus keramischen Faservlies angeordnet ist.

Aus DE 101 02 854 C2 ist ein Lanzenkopf für eine Sauerstofflanze bekannt mit einem im Inneren des Lanzenkopfes ausgebildeten an einen Sauerstoff-Zuführkanal angeschlossenen Sauerstoff-Sammelraum und mit mehreren von dem Sammelraum abzweigenden, die Bodenwand des Sauerstoff-Sammelraumes durchsetzenden Ausblasdüsen. Die Düsenmündungen sind durch Mündungsringe verstärkt sind, die in einem Umfangsfalz der Düsenmündung befestigt sind, wobei die Mündungsringe aus feuerfestem Keramikmaterial bestehen und jeweils in einen Außenring aus Metall eingelegt sowie mit diesem verbunden sind. Der Außenring ist jeweils in einen Umfangsfalz der Düsenmündung eingeschraubt.

Aus EP 510 518 A1 ist ein Verfahren zur Herstellung eines gekühlten Blaslanzenkopfes mit einer Blaslanzenkopfschale bekannt, in der Düsenaustrittsöffnungen für das Auf- oder Einblasen von Gasen auf eine oder in eine Metallschmelze vorgesehen sind, wobei zumindest vor der Endfertigung der Düsenaustrittsöffnungen Verstärkungsmaterial auf die Blaslanzenkopfschale im Bereich der Düsenaustrittsöffnungen aufgebracht wird und anschließend die Düsenaustrittsöffnungen durch dieses Verstärkungsmaterial hindurch in die Blaslanzenkopfschale auf Solldurchmesser gebohrt werden.

Aus DE 299 07 794 U1 ist ein Lanzenkopf für eine wassergekühlte Sauerstofflanze bekannt mit einem zentralen Sauerstoffsammelraum, einen den Sammelraum umgebenden Kühlwassermantel mit einem inneren Mantelraum für die Kühlwasserzuführung sowie einem äußeren Mantelraum für die Kühlwasserabführung, die im Bodenbereich des Lanzentopfes ineinander übergehen. Vom Sammelraum zweigen, den Kühlwassermantel durchsetzende Düsenrohre ab, wobei im äußeren Mantelraum jeweils im Bereich der diesen durchsetzenden Düsenrohre erste Mittel vorgesehen sind, die ein Anliegen des Kühlwasserstromes an der Außenwand der Düsenrohre bewirken.

Aus DE 33 22 556 A1 ist zum Einblasen fluidisierter Stoffe in eine Metallschmelze mit einem metallischen Rohr und mit einer das Rohr umgebenden feuerfesten Ummantelung bekannt, wobei die Lanze ein keramisches Mundstück aufweist und die feuerfeste Ummantelung in axialer Richtung aus mehreren Schichten von unterschiedlich verschleißbaren Material aufgebaut ist.

Aus JP 60089515, JP 610099614, JP 63206420 A, JP 4124213 A, JP 7054031 A, JP 61213311 A und JP 55145113 A sind weitere Blaslanzen für Stahlschmelzen in Konvertern bekannt

Die Düse einer Blaslanze kann nur für einen Betriebspunkt bezüglich Vordruck und Volumenstrom ausgelegt werden. Die Parameter werden im Betrieb jedoch ständig geregelt, so dass die reale Düsenströmung für eine längere Zeitdauer vom idealen Auslegungszustand abweicht. Als Folge bilden sich innerhalb und außerhalb der Düse komplexe Störungen in Form von Expansionswellen und Verdichtungsstößen, die zum Verschleiß der Düsenkante führen. Die Verringerung des Vordruckes unter den Auslegungsdruck ist kritisch, da die gebildeten schrägen Verdichtungsstöße an der Düsenkante zu einer Ablösung des kalten Sauerstoffstrahls von der Düsenwand führen. Dabei wird ein Rezirkulationsgebiet gebildet, über das heißes Konvertergas an die Düsenwand aus Kupfer gelangt. Da das Kupfer eine niedrige Schmelztemperatur von 1083 °C hat, setzt der Verschleiß trotz innerer Wasserkühlung rasch ein. Hat der Verschleiß an einer bestimmten Stelle im divergenten Teil der Düse begonnen, so wird diese Stelle im weiteren Konverterbetrieb auch besonders intensiv durch Konvertergas beaufschlagt. Das Kupfer verschleißt aufgrund des sich ständig vergrößernden Rezirkulationsgebietes fortlaufend. Die Gefahr eines Wasserdurchbruchs steigt.

Die Standzeit der gegenwärtig verwendeten Blaslanzen liegt bei etwa 150 - 250 Konverterschmelzen. Nach dieser Zeit sind die Düsenkanten so weit verschlissen, dass die Gefahr eines Wasserdurchbruchs besteht und die Lanzenköpfe ausgetauscht werden müssen.

Die Aufgabe der vorliegenden Erfindung liegt darin, einen Lanzenkopf für eine Blaslanze bereitzustellen, der zur Reduzierung des Verschleißes an der Austrittskante und Innenwand der Düsen und damit des Lanzenkopfes führt.

Die Aufgabe der vorliegenden Erfindung wird durch einen Lanzenkopf für eine Blaslanze gelöst mit einem im Inneren des Lanzenkopfes befindlichen Innenrohr für die Sauerstoffzuführung und mit mehreren von dem Innenrohr abzweigenden, die Bodenwand des Lanzenkopfes durchsetzenden Düsen zum Führen eines Sauerstoffstrahls, wobei die Innenwände der Düsen vollständig mit einem feuerfesten Keramikmaterial, enthaltend C/SiC belegt sind.

Der keramischen C/SiC Düseneinsatz führt zur Reduzierung des Verschleißes an der Austrittskante und der Innenwand der Lavaldüsen von Sauerstoff-Blaslanzen. Die unmittelbar mit heißem Konvertergas beaufschlagten Kupferbereiche am Austritt der Lavaldüse werden vorteilhaft durch eine neue hitzbeständige C/SiC-Keramik ersetzt. Durch diese Maßnahme lässt sich die Standzeit der Düsen und des gesamten Lanzenkopfes erhöhen. Die Standzeiten des Lanzenkopfes werden vorteilhaft erhöht und damit die Kosten reduziert, die mit dem Einbau eines neuen Lanzenkopfes verbunden sind.

Die gesamte innere Düsenwand wird durch eine C/SiC-Keramik ersetzt. Der C/SiC-Einsatz verhindert vorteilhaft eine Änderung der Geometrie durch Materialverschleiß im Bereich der Düsenaustrittskante. Dabei sind die Kohlenstofffasern in eine SiC-Matrix eingebettet. Eine herkömmliche SiC Keramik ist hoch temperaturbeständig, hart und weist gute Korrosionsbeständigkeit auf. Eine Beschädigung an der Oberfläche der SiC Keramik führt jedoch zum Einleiten eines Risses bei thermischer oder mechanischer Belastung. Aufgrund des geringen Widerstands, den der Werkstoff dem Riss entgegensetzt, kann sich der Riss leicht ausbreiten. Dadurch kommt es zu dem für Keramik charakteristischem Sprödbruchverhalten, das ein spontanes Versagen des Bauteils unter Belastung bedeutet.

Durch die Kohlestofffasern in dem neuen C/SiC-Werkstoff wird das schlagartige Versagen eines Bauteils durch einen Sprödbruch verhindert. Bei einem Riss bricht die SiC Keramik zwar auf, jedoch werden die auftretenden Kräfte durch die Kohlestofffasern gemindert. Erst wenn die Last auch für die Kohlestofffasern zu groß wird, kommt es zum Bruch im jeweiligen Bauteil. Aus den genannten Gründen weist der C/SiC-Werkstoff einen deutlich höheren Risswiderstand als ein normaler SiC-Werkstoff auf. Zusätzlich erhöhen sich Dehnbarkeit, Bruchzähigkeit und Thermoschockbeständigkeit.

Durch die leicht konische Form wird der C/SiC-Einsatz nach dem Gießen des Lanzenkopfes von innen her in den Lanzenkopf eingesetzt und verklebt.

Der C/SiC des erfindungsgemäßen Einsatzes 6 wird durch eine Flüssiginfiltration von faserverstärkten oder faserbündelverstärkten kohlenstoffhaltigen Vorkörpern mit Siliziumschmelzen hergestellt. Derlei Verfahren sind beispielsweise aus der DE 198 56 721 A1, DE 197 11 829 C2 oder der DE 197 10 105 A1 bekannt.

Zur Herstellung von kohlenstofffaserverstärkten Siliciumcarbid (C/SiC) werden Kohlenstofffaserbündel auf Längen zwischen 2 mm und 10 mm, vorzugsweise 5 mm bis 8 mm zerschnitten und zusammen mit einem trockenen Phenolharz-Pulver und/oder Phenol-Novolak-Pulver und/oder -Granulate aus diesen willkürlich oder isotrop vermischt. Die gemischte Masse wird anschließend in eine dem Endbauteil entsprechende Form/Kontur beliebiger Geometrie und Größe eingefüllt.

Der Kohlenstofffasergehalt kann zwischen 20 Gew.-% und 80 Gew.-%, vorzugsweise zwischen 40 Gew.-% und 60 Gew.-% variiert werden. Durch die Variationsmöglichkeit von Faser- und Matrixgehalt im Halbzeug ist die Möglichkeit gegeben, die physikalischen und mechanischen Eigenschaften, insbesondere die Festigkeit, Steifigkeit, Bruchzähigkeit, Bruchdehnung, Härte und Abrasionsbeständigkeit, Raumgewicht, thermische und elektrische Leitfähigkeit des faserverstärkten C/SiC- Verbundwerkstoffes gezielt auf die jeweiligen Anwendungsprofile maß zu schneidern. Die Formgebung erfolgt durch Gesenkpressen, isostatische Pressverfahren oder Vakuumsack-Formgebungsverfahren.

Anschließend werden die endformnah hergestellten faserverstärkten Halbzeuge in einen widerstandsbeheizten Vakuumofen positioniert, wobei die stöchiometrisch benötigte Siliciummenge in Form von Siliciumgranulat und/oder Siliciumpulver und/oder beschichtetem Siliciumgranulat und/oder dem Bauteil angepassten Siliciumgranulat-Formkörpern zur Erzeugung der Siliciumcarbid-Matrix im späteren C/SiC-Verbundwerkstoff auf dem Halbzeug-Körper oder im Inneren des Halbzeug-Körpers positioniert wird, und unter Vakuum und/oder Schutzgas, vorzugsweise Stickstoff oder Argon, auf Temperaturen oberhalb des Schmelzpunktes von Silicium > 1405 °C aufgeheizt wird.

Bei Erreichung der Silicium-Schmelztemperatur von 1405 °C penetriert das flüssige Silicium von oben oder im Inneren des Bauteils in die zuvor erzeugten Poren und Kapillaren des carbonisierten kohlenstofffaserverstärkten Kohlenstoffkörpers. Bei weiterer Temperatursteigerung bis auf maximal 1800 °C reagiert das Silicium mit dem angebotenen Kohlenstoff aus der Matrix und der die Faserbündel umhüllenden carbonisierten Schlichte zu Siliciumcarbid ab.

Nach dem Abkühlen liegt ein kohlenstoffverstärkter Siliciumcarbid-Verbundwerkstoff (C/SiC) mit hoher Bruchzähigkeit und Schadenstoleranz, isotropem Charakter, niedrigem Raumgewicht von 2,1 g/cm³ bis 2,6 g/cm³, hoher Temperaturbeständigkeit von bis zu 1800 °C und Festigkeit von > 100 MPa, keiner Porosität, herausragender Oxidations-, Korrosions- und Abrasionsbeständigkeit vor.

Die Hülse mit einer C/SiC-Keramik weist typischerweise eine Länge von etwa 100 mm bis 150 mm und eine Wanddicke von 2,0 mm bis 2,5 mm und 3,0 mm bis 3,5 mm im Randbereich auf. Die Hülse hat im Innenbereich der Düse einen Durchmesser von etwa 55,0 mm bis 57 mm und im Außenbereich der Düse einen Durchmesser 53 mm bis 55 mm. Im Innenbereich der Hülse verdickt sich die Wandstärke der Hülse und beträgt in den mittleren 10 mm bis 30 mm etwa 6,0 mm bis 9,0 mm. Der Innendurchmesser der Hülse 6 verjüngt sich zur Mitte hin auf 37 mm bis 45 mm.

Die Erfindung wird anhand einer Zeichnung und eines Beispiels näher erläutert.

Es zeigen:
- Figur 1: einen seitlichen Querschnitt durch einen BOF Konverter mit Blaslanze,
- Figur 2: eine Draufsicht von unten auf eine Blaslanze,
- Figur 3: einen Querschnitt durch eine Blaslanze entlang der Linie A-A in der Fig. 2.

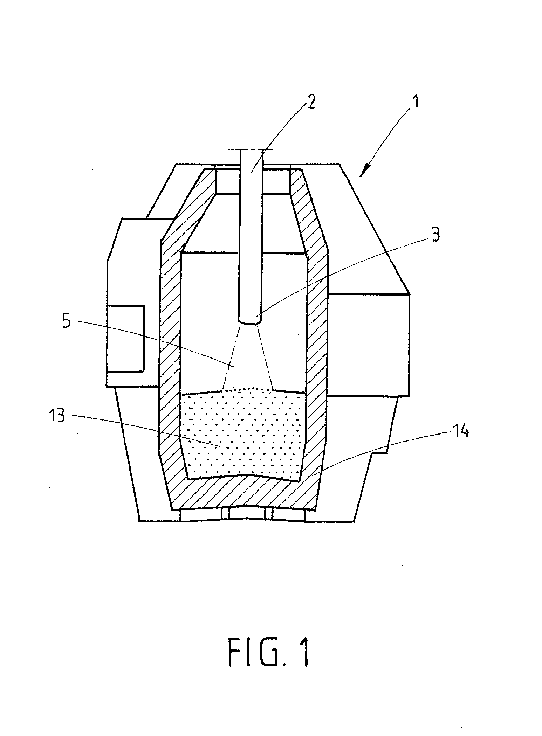

In einem Konverter 1, wie in Fig. 1 dargestellt, findet durch den über die Blaslanze 2 eingeblasenen Sauerstoff eine intensive Entkohlungsreaktion in der Schmelze 13 statt. Der Konverter 1 ist geschützt durch eine Konverterwand 14 mit Feuerfestmaterial. Durch die Blaslanze 2 werden von oben Sauerstoffstrahlen 5 aufgeblasen. Der gewöhnliche Abstand zwischen dem Lanzenkopf 3 und der Schmelzenoberfläche 13 beträgt etwa 1.2 m bis 3.0 m. Im Brennfleck entstehen Temperaturen von etwa 2300 °C. Die gesamte Lanze 2 hat einen Durchmesser bis zu 400 mm und eine Länge von etwa 20 m. Die Düsen 4 beschleunigen den Sauerstoff auf Überschallgeschwindigkeit. Der Sauerstoffstrahl 5 erzeugt auf der Schmelze 13 eine oszillierende Blasmulde. Metalltröpfchen werden aus der Schmelze 13 herausgerissen. Es bildet sich eine Schaumschlacke, die etwa 2/3 der Höhe des Konverters 1 ausfüllt. Die Sauerstoffstrahlen 5 sorgen für eine intensive Entkohlungsreaktion in der Schmelze 13. Die Lanze 2 wird mit Wasser gekühlt. Die Wassermengen liegen bei etwa 240 m³/h, bei p = 8 bar Wasserdruck. Der Außendurchmesser des Lanzenkopfes beträgt bis zu 400 mm und besteht gewöhnlich aus gegossenem Kupfer.

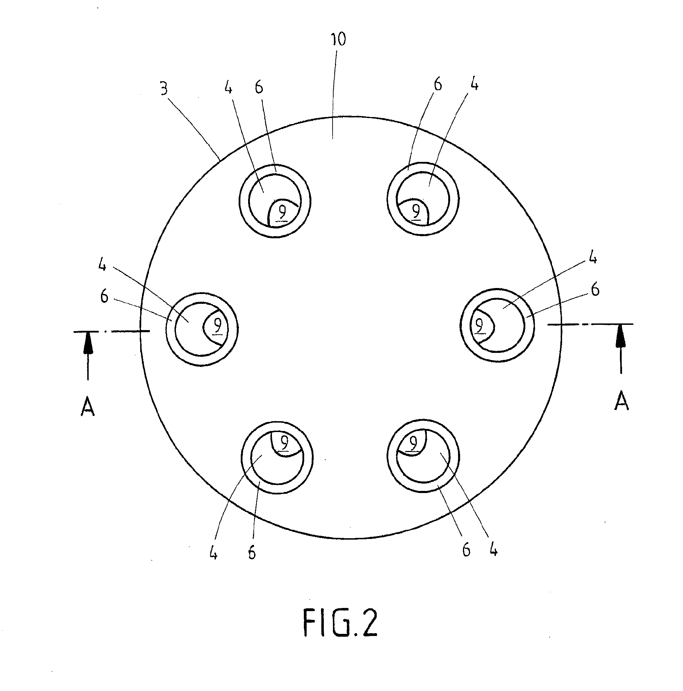

Die Lanze 2, wie in Fig. 2 dargestellt, enthält je nach Konvertergröße bevorzugt sechs Düsen 4. Der Sauerstoffstrahl wird über das Innenrohr 9 in die Düsen 4 geführt und aus den Düsen 4 als Sauerstoffstrahl 5 auf die Schmelze 13 gegeben. Der Sauerstoff-Volumenstrom beträgt 400 Nm³/min bis 1000 Nm³/min bei einem Druck von 8 bar bis 13 bar. Die Düsen 4 haben einen Anstellwinkel von 14° bis 23°. Die Innenwand der Düsen 4 ist mit einer C/SiC Schicht bedeckt, die durch eine C/SiC Hülse 6 gegeben ist. Die gesamte innere Düsenwand 4 wird durch eine C/SiC-Keramik 6 ersetzt. Durch die leicht konische Form wird der C/SiC-Einsatz, die Hülse 6, nach dem Gießen des Lanzenkopfes 3 von innen her in den Lanzenkopf 3 eingesetzt und mit diesem verklebt.

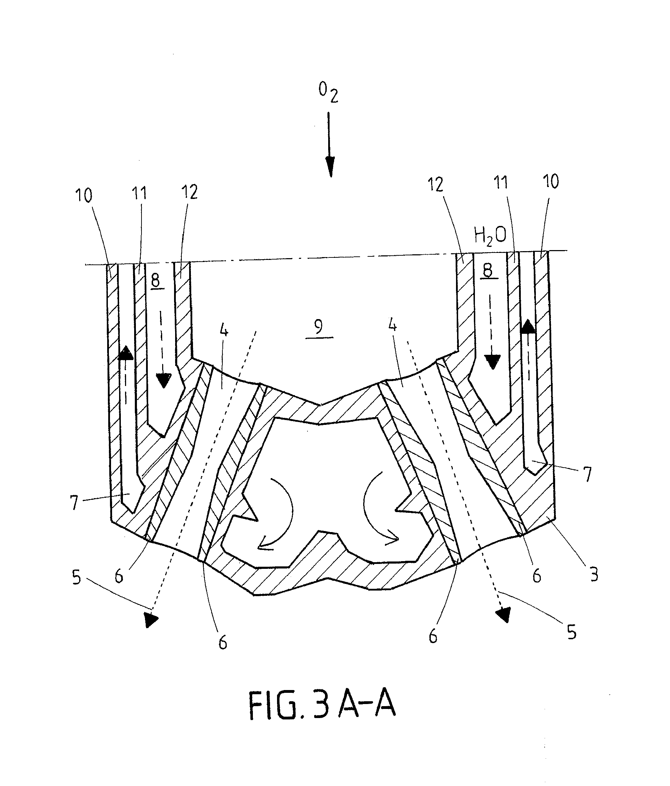

Fig. 3 zeigt den Querschnitt durch eine Blaslanze 2 entlang der Linie A-A in der Fig. 2. Der Lanzenkopf 3 aus Kupfer für die Blaslanze 2 enthält ein Innenrohr 9 durch den Sauerstoff zugeführt und auch als Sauerstoff-Sammelraum dient. Vom Innenrohr 9 zweigen mit einem Anstellwinkel von 14° bis 23° sechs die Bodenwand des Lanzenkopfes 3 durchsetzende Düsen 4 ab. Die gesamte innere Düsenwand 4 ist vollständig mit einer C/SiC Schicht bedeckt, die durch eine C/SiC Hülse 6 gegeben ist. Die Kupfer Düsenwand wird daher durch eine C/SiC-Keramik 6 ersetzt. Die Hülse 6 hat eine leicht konische Form und wird nach dem Gießen von innen her in den Kupfer Lanzenkopf 3 eingesetzt.

Der Kohlenstofffasergehalt der C/SiC-Keramik beträgt zwischen 20 Gew.-% und 80 Gew.-%, vorzugsweise zwischen 40 Gew.-% und 60 Gew.-%. Die C/SiC-Keramik 6 hat eine Dichte von 2,1 g/cm³ bis 2,6 g/cm³. Die Hülse 6 weist eine Länge von etwa 130 mm auf. Die Hülse 6 weist eine Wanddicke von 2,5 mm bis 5,0 mm im Randbereich auf. Die Hülse 6 hat im Innenbereich der Düse 4 einen Durchmesser von etwa 56 mm. Die Hülse 6 hat im Außenbereich der Düse 4 einen Durchmesser 54 mm. Dieser Unterschied im Durchmesser verleiht der Hülse den leicht konischen Verlauf. Im Innenbereich der Hülse 6.

Der Lanzenkopf 3 der Blaslanze 2 wird mit Wasser gekühlt. Dazu wird durch ein Mittelrohr 8 über die Blaslanze 2 Kühlwasser in den Lanzenkopf 3 zugeführt. Das Kühlwasser wird durch ein Außenrohr 7 zurückgeführt. Der Aufbau aus Mittelrohr 8, Wandung Innenrohr 12, Wandung Mittelrohr 11, Außenrohr 7 und Wandung Außenrohr 10 bildet einen Kühlmantel für den Lanzenkopf 3 und die Düsen 4.

### Bezugszeichenliste

- 1: Konverter / BOF / Basic Oxygen Furnace
- 2: Lanze / Blaslanze
- 3: Lanzenkopf
- 4: Düse / Lavaldüse
- 5: Sauerstoffstrahl
- 6: Hülse / Konische Hülse / C/SiC-Keramik / C/SiC Einsatz
- 7: Außenrohr / Kühlwasserrückführung / Wasserüberlauf
- 8: Mittelrohr / Kühlwasserzuführung / Wasservorlauf
- 9: Innenrohr / Sauerstoffzuführung
- 10: Wandung Außenrohr
- 11: Wandung Mittelrohr
- 12: Wandung Innenrohr
- 13: Schmelze
- 14: Konverterwand

## Patentansprüche

1. Lanzenkopf für eine Blaslanze mit einem im Inneren des Lanzenkopfes (3) befindlichen Innenrohrs (9) für die Sauerstoffzuführung und mit mehreren von dem Innenrohr (9) abzweigenden, die Bodenwand des Lanzenkopfes (3) durchsetzenden Düsen (4), wobei die Innenwände der Düsen (4) vollständig mit einem feuerfesten Keramikmaterial, enthaltend C/SiC, belegt sind.

2. Lanzenkopf nach Anspruch 1, wobei der Lanzenkopf (3) vier bis sieben Düsen (4) mit einen Anstellwinkel von 14° bis 23° aufweist.

3. Lanzenkopf nach Anspruch 1 oder 2, wobei die Innenwand der Düsen 4 mittels eines C/SiC Einsatzes (6) belegt ist.

4. Lanzenkopf nach einem der Ansprüche 1 bis 3, wobei der C/SiC Einsatz (6) konisch ist und nach dem Gießen des Lanzenkopfes (3) von innen her in den Lanzenkopf (3) eingesetzt und in der Düse (4) verklebt wird.

5. Lanzenkopf nach einem der Ansprüche 1 bis 4, wobei der C/SiC Einsatz (6) mittels eines Phenolharzes verklebt ist, der bevorzugt Kupferspäne enthält.

6. Lanzenkopf nach einem der Ansprüche 1 bis 5, wobei der Kohlenstofffasergehalt des C/SiC Einsatzes (6) zwischen 20 Gew.-% und 80 Gew.-%, vorzugsweise zwischen 40 Gew.-% und 60 Gew.-% beträgt.

7. Lanzenkopf nach einem der Ansprüche 1 bis 6, wobei der C/SiC Einsatz ein Raumgewicht von 2,1 g/cm³ bis 2,6 g/cm³ aufweist.

8. Lanzenkopf nach einem der Ansprüche 1 bis 7, wobei der C/SiC Einsatz (6) eine Länge von etwa 100 mm bis 150 mm aufweist.

9. Verwendung eines feuerfesten Keramikmaterial, enthaltend C/SiC zur vollständigen Belegung der Innenwände von Düsen (4) eines Lanzenkopfs (3) einer Blaslanze (2) für die Sauerstoffzuführung in einen Konverter (1).
